# DEMANDE DE BREVET EUROPEEN

(11) **EP 1 739 031 A1**
(43) Date de publication de la demande: **03.01.2007**
(21) Numéro de dépôt: 06291000.5
(22) Date de dépôt: 20.06.2006
(51) Int. Cl.: B65D 81/38

(54) **Sac de transport isotherme**

(30) Priorité: 30.06.2005 FR 0506720
(71) Demandeur: Locaplast, 77600 Bussy Saint Georges (FR)
(72) Inventeur: Girard, Edouard c/o LOCAPLAST, 77603 Marnes la Vallée (FR)
(74) Mandataire: Breese Derambure Majerowicz

(57) **Abrégé**

La présente invention concerne un sac isotherme pour le transport d'articles congelés, caractérisé en ce qu'il est constitué par une enveloppe formée par au moins une feuille de plastique alvéolaire à cellules fermées, un film hermétique et une enveloppe de renfort, ladite enveloppe étant pliée et soudée pour former un sac muni d'au moins deux rabats superposables, ledit sac étant en outre muni de moyens d'accrochage sur les parois d'un chariot.

## Description

La présente invention concerne le domaine des sacs isothermes.

On connaît les sacs isothermes formés par une enveloppe à faible transmission calorifique, destinée à stocker temporairement des articles congelés, notamment pendant la durée de transport entre les bacs réfrigérés d'un magasin et le congélateur du consommateur.

Ces sacs présentent une efficacité limitée et ne sont pas très élégants ni faciles à manipuler.

Le but de la présente invention est de remédier à ces inconvénients en proposant un sac pour le transport d'articles congelés, caractérisé, selon son acception la plus générale, en ce qu'il est constitué par une enveloppe formée par au moins une feuille de plastique alvéolaire à cellules fermées, un film hermétique et une enveloppe de renfort, ladite enveloppe étant pliée et soudée pour former un sac muni d'au moins deux rabats superposables, ledit sac étant en outre muni de moyens d'accrochage sur les parois d'un chariot.

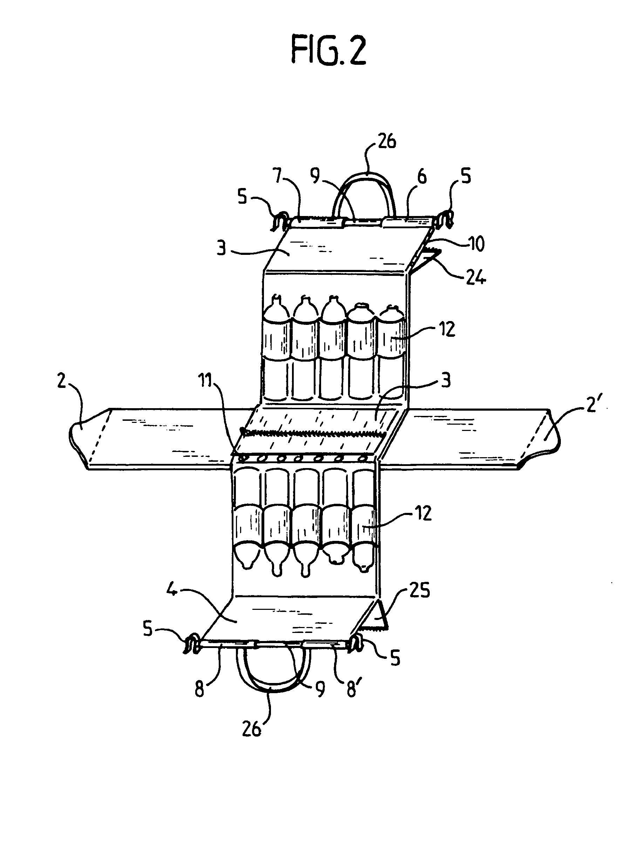

Avantageusement, il comporte des soufflets latéraux (2) (2') Fig. 2.

Selon une variante, l'enveloppe de renfort est formée par une toile biodégradable.

De préférence, le moyen d'accrochage est formé par des tiges solidaires chacune de l'un des bords supérieurs dudit sac.

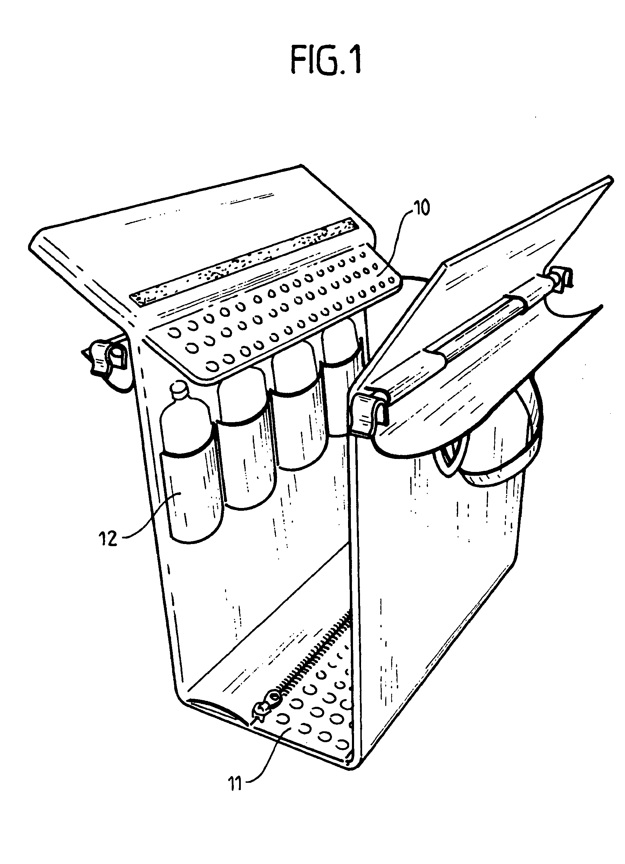

Selon un mode de réalisation particulier, le sac selon l'invention comporte un ou deux récipients réfrigérés (10) et (11) Fig. 1 et des ganses (12) pour maintenir les bouteilles.

L'invention sera mieux comprise à la lecture de la description qui suit, se référant à un exemple non limitatif de réalisation, où :
- la figure 1 représente une vue en coupe une vue en perspective d'un sac selon l'invention ;
- la figure 2 représente une vue en perspective du sac mis à plat avant assemblage ;
- la figure 3 représente un exemple de chariot équipé d'une pluralité de sacs ;
- les figures (4) et (5) représentent 2 types de fermetures préférentielles, l'une vraiment hermétique à glissière (Fig. 4). L'autre plus traditionnelle constituée de chaînes souples, à dents de préférences en plastique injecté, qui engrènent au moyen d'un curseur (Fig. 5).

Le sac selon l'invention présente une enveloppe formée d'une association de trois couches au moins :
- une couche extérieure formée par une toile biodégradable, assurant la résistance mécanique du sac
- une couche intermédiaire formée par un matelas réalisé en un matériau alvéolaire avec des cellules fermées, assurant une bonne isolation thermique
- une couche intérieure formée par un film étanche, par exemple un film plastique.

Elle peut comporter des couches additionnelles, par exemple une feuille aluminisée par ajouter une barrière thermique supplémentaire.

La feuille est pliée et assemblée, par soudure ou par couture, pour former un sac (Fig. 1) à section rectangulaire, avec les soufflets (2) et (2'), avec deux rabats (3, 4) superposables pour assurer une fermeture évitant toute déperdition thermique.

la figure 2 représente une vue en perspective du sac mis à plat avant assemblage. Des moyens de maintien (5), par exemple des liaisons « VELCRO » (nom commercial) peuvent assurer la fermeture du sac.

Le sac présente des replis cousus (6 à 8) pour recevoir une tige de support (9) dont la longueur est déterminée pour permettre un accrochage sur le bord d'un chariot de supermarché.

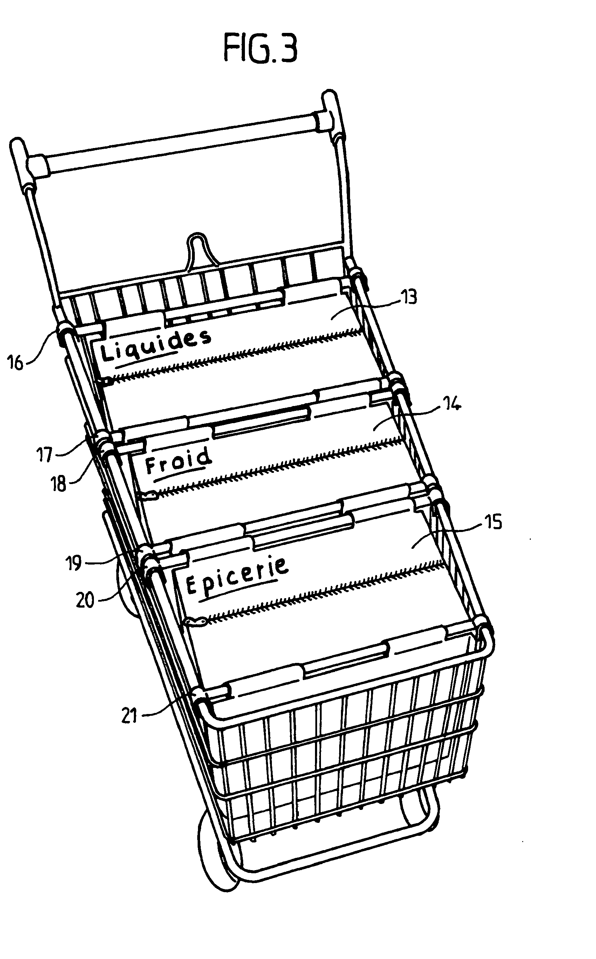

La figure 3 représente un exemple de chariot équipé d'une pluralité de sacs (13 à 15). Lorsque les tiges (16 à 21) sont écartées, et les fermetures ouvertes, les sacs sont en position ouverte, afin de faciliter le remplissage.

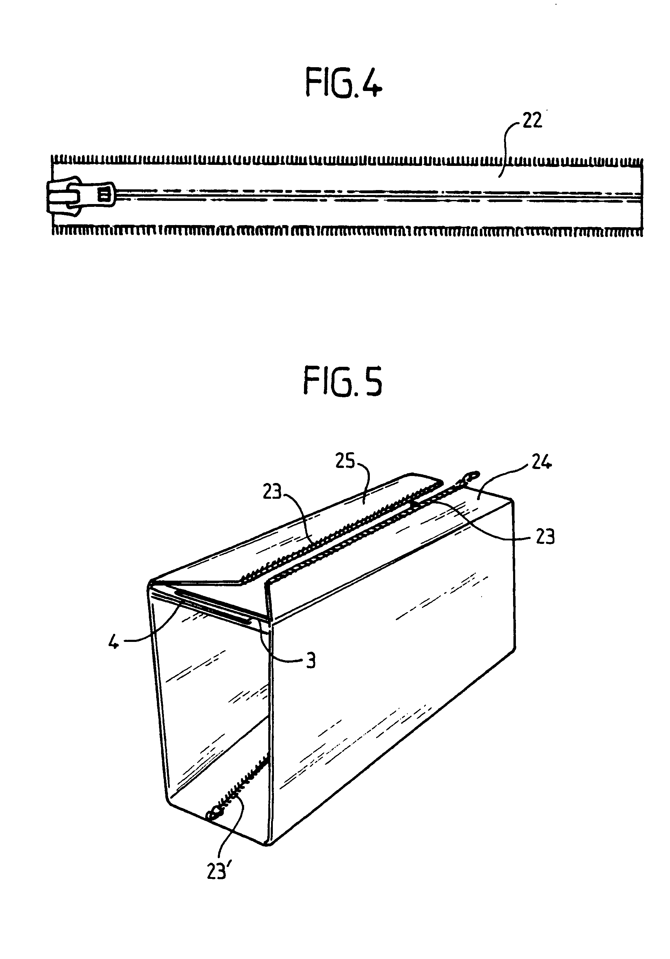

Lorsque les fermetures à glissières (22) Fig. 4 sont resserrées ou les fermetures traditionnelles (23) qui équipent les panneaux supérieurs (24) et (25) de fermeture du sac (Fig. 2) elles assurent une bonne conservation de la fraîcheur.

Les tiges (16 à 21) peuvent rester en place pour former des anses facilitant le transport, ou être retirées.

Des anses bretelles, (26) permettent le port des sacs à l'épaule et les soufflets (2) et (2') en font des sacs d'agrément pour les femmes.

## Revendications

1. Sac isotherme pour le transport d'articles congelés, **caractérisé en ce qu'**il est constitué par une enveloppe formée par au moins une feuille de plastique alvéolaire à cellules fermées, un film hermétique et une enveloppe de renfort, ladite enveloppe étant pliée et soudée pour former un sac muni d'au moins deux rabats superposables, ledit sac étant en outre muni de moyens d'accrochage sur les parois d'un chariot.

2. Sac isotherme pour le transport d'articles congelés selon la revendication 1, **caractérisé en ce qu'**il comporte des soufflets latéraux.

3. Sac isotherme selon la revendication 1 ou 2, **caractérisé en ce que** l'enveloppe de renfort est formée par une toile biodégradable.

4. Sac isotherme selon l'une au moins des revendications précédentes, **caractérisé en ce que** le moyen d'accrochage est formé par des tiges solidaires à chacun des bords supérieurs dudit sac.

5. Sac isotherme selon l'une au moins des revendications précédentes, **caractérisé en ce qu'**il comporte un ou deux récipients réfrigérés.

6. ― Equipement formé par un chariot de supermarché et des sacs de conditionnements d'articles, **caractérisé en ce que** lesdits sacs sont constitués par une enveloppe formée par au moins une feuille de plastique alvéolaire à cellules fermées, un film hermétique et une enveloppe de renfort, ladite enveloppe étant pliée et soudée pour former un sac muni d'au moins deux rabats superposables, lesdits sacs étant en outre muni de moyens d'accrochage sur les parois d'un chariot.

7. ― Sac isotherme, selon l'une des revendications précédentes, **caractérisé en ce qu'**il comporte une fermeture à glissière.

8. ― Sac isotherme, selon les revendications 1 et 7, **caractérisé en ce qu'**il comporte une fermeture traditionnelle constituée de chaînes souples à dents de préférence en plastique qui engrènent au moyen d'un curseur.

9. Sac isotherme, selon la revendication 1, **caractérisé en ce qu'**il comporte des anses bretelles
